# EUROPÄISCHE PATENTSCHRIFT

(11) **EP 0 986 615 B1**
(45) Veröffentlichungstag und Bekanntmachung des Hinweises auf die Patenterteilung: **22.01.2003**
(21) Anmeldenummer: 98917551.8
(22) Anmeldetag: 19.05.1998
(51) Int. Cl.: C09B 45/16, C25D 11/24

(54) **1:2-CHROMKOMPLEXFARBSTOFFE, DEREN HERSTELLUNG UND VERWENDUNG**
1:2 CHROMIUM COMPLEX DYES, THEIR PRODUCTION AND USE
COLORANTS COMPLEXES DE CHROME 1:2, LEUR PRODUCTION ET LEUR UTILISATION

(30) Priorität: 29.05.1997 EP 97108652
(43) Veröffentlichungstag der Anmeldung: 22.03.2000
(73) Patentinhaber: Clariant Finance (BVI) Limited, Road Town, Tortola (VG)
(72) Erfinder: KOERTE, Klaus, CH-4107 Ettingen (CH)
(74) Vertreter: D'haemer, Jan Constant
(86) Internationale Anmeldenummer: IB9800764
(87) Internationale Veröffentlichungsnummer: WO98054264

(56) Entgegenhaltungen:
- CH-A- 355 550
- CH-A- 382 888
- CH-A- 396 256

## Beschreibung

Gebilde, Gegenstände oder Teile aus Aluminium oder Aluminiumlegierungen, die mit einer schützenden Oxydschicht versehen sind, insbesondere einer auf galvanischem Wege durch Anodisierung erzeugten Oxydschicht, werden heutzutage vermehrt im Ingenieur- und Bauwesen verwendet, z.B. als Bestandteil oder/und zur Verzierung von Gebäuden, Transport- oder Verkehrsmitteln, oder für Gebrauchs- oder Kunstgegenstände. Zur ästhetischen Gestaltung solcher Gebilde, Gegenstände oder Teile werden diese, bzw. ihre Oxydschichten, gerne gefärbt. Es ist daher erwünscht, daß die gefärbten Schichten ihre farbige Gestaltung möglichst lange beibehalten und folglich möglichst hohe Echtheiten gegen umgebungsbedingte Einflüsse, vor allem gegen die Einwirkung des Sonnenlichtes, aufweisen.

Aus der CH-A 396256 sind Schwermetallkomplexe von phosphonsäuregruppenhaltigen Monoazofarbstoffen bekannt, die u.a. zum Färben von anodischen Oxydschichten auf Aluminium verwendet werden. Beispiel 10 der CH-A 396256 beschreibt einen gelben Chromkomplex des Monoazofarbstoffes aus 2-Aminophenol-4,6-disulfonsäure → 3-Acetoacetylaminobenzolphosphonsäure.

Es wurde nun gefunden, daß die unten definierten 1:2-Chromkomplexfarbstoffe sich hervorragend als gelbe Farbstoffe für solche Oxydschichten, insbesondere für anodisiertes Aluminium oder anodisierte Aluminiumlegierungen, eignen und sich durch ihre überraschend hohe Lichtechtheit auszeichnen.

Die Erfindung betrifft die definierten 1:2-Chromkomplexfarbstoffe deren Herstellung und deren Verwendung zum Färben von künstlich (vornehmlich galvanisch) erzeugten Oxydschichten auf Aluminium oder Aluminiumlegierungen, sowie Präparate, die diese Farbstoffe enthalten.

Ein erster Gegenstand der Erfindung sind also 1:2-Chromkomplexfarbstoffe der Formel 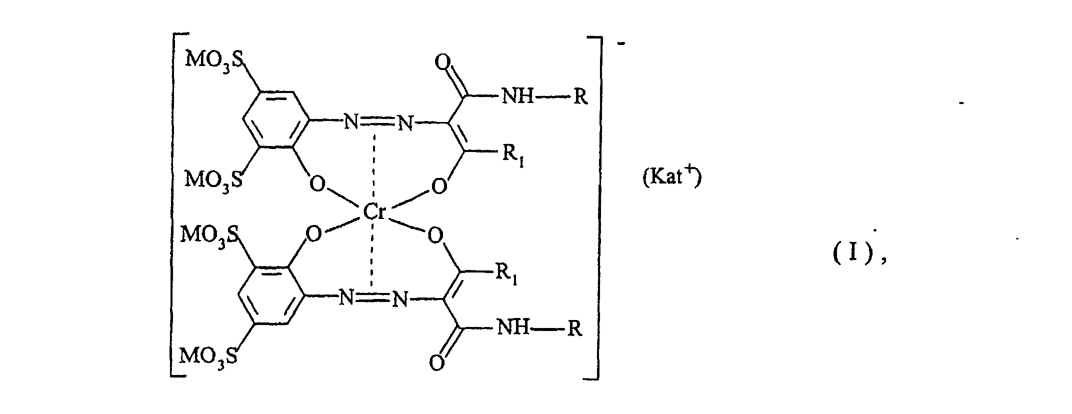 worin
- R: C₁₋₉-Alkyl oder einen Rest der Formel 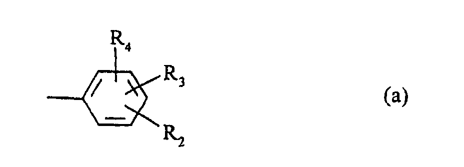 oder 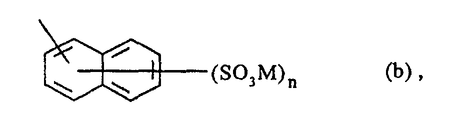
- R₁: C₁₋₄-Alkyl,
- R₂: Wasserstoff oder -SO₃M,
- R₃: Wasserstoff, Methyl oder Methoxy,
- R₄: Wasserstoff, Methyl, Methoxy oder Chlor,
- n: 0 bis 3,
- M: Wasserstoff oder ein nicht-chromophores Kation und
- Kat⁺: Wasserstoff oder ein nicht-chromophores Kation
bedeuten.

Die in der Formel (I) vorkommenden Alkylreste können linear oder, wenn sie drei oder mehr Kohlenstoffatome enthalten, auch verzweigt sein, oder, wenn sie sechs oder mehr Kohlenstoffatome enthalten, auch cyclisch sein.

In der Bedeutung von R₁ sind die niedrigermolekularen Alkylreste bevorzugt, insbesondere Äthyl und vor allem Methyl.

Unter den Alkylresten in der Bedeutung von R sind die verzweigten und die zyklischen bevorzugt, insbesondere C₄₋₈-Isoalkyl, sekundäres C₃₋₈-Alkyl, unsubstituiertes Cyclohexyl und Cyclohexyl das eine bis drei Methylgruppen als Substituenten trägt. Nach einer Ausführungsform der Erfindung, sind in der Bedeutung von R diejenigen Alkylreste bevorzugt, die mindestens 4 Kohlenstoffatome enthalten.

In den Resten der Formel (a) können sich die jeweiligen Substituenten in beliebigen Stellungen des Phenylrestes befinden; wenn R₂ für eine Sulfogruppe -SO₃M steht, befindet sich diese Gruppe vorzugsweise in meta-Stellung oder para-Stellung; wenn R₃ für Methyl oder Methoxy steht, oder/und wenn R₄ für Methyl, Methoxy oder Chlor steht, können sich diese Substituenten in beliebigen der verfügbaren Stellungen befinden, wobei vorzugsweise mindestens eine der beiden ortho-Stellungen des Phenylrestes unsubstituiert ist. Besonders bevorzugt stehen sowohl R₃ als auch R₄ für Wasserstoff.

Die freie Bindung am sulfosubstituierten Naphthalinrest (b) kann sich beliebig in α- oder β-Stellung befinden, wobei die α-Stellung bevorzugt ist. Bei n = 1 bis 3 können die n Sulfogruppen in der Formel (b) sich in n beliebigen verfügbaren Stellungen befinden, wobei vorzugsweise die vicinalen Stellungen zur Bindung zu -NH- unsubstituiert sind. Es seien insbesondere α-Naphthyl und die folgenden Naphthylsulfonsäurereste der Formel (b) genannt: 2-Naphthyl-4,6,8-trisulfonsäure, 1-Naphthyl-3,6--disulfonsäure, 1-Naphthyl-3,7-disulfonsäure, 1-Naphthyl-4,6-disulfonsäure, 1-Naphthyl-4,7-disulfonsäure, 2-Naphthyl-4,8-disulfonsäure, 2-Naphthyl-5,7-disulfonsäure, 2-Naphthyl-6,8-disulfonsäure, 1-Naphthyl-3-, -4-, -5-, -6- oder -7-sulfonsäure und 2-Naphthyl-5- oder -6-sulfonsäure. Darunter sind diejenigen bevorzugt, worin n = 1 ist, vor allem 1-Naphthyl-4- oder -5-sulfonsäure.

Besonders bevorzugt in der Bedeutung von R sind Isooctyl, Sulfophenyl oder insbesondere unsubstituiertes Phenyl.

Die Sulfonsäuregruppen können in Form der freien Säure oder, vorzugsweise, in Form von Salzen nicht-chromophorer Kationen vorliegen.

M und Kat⁺ können jeweils für Wasserstoff oder ein nicht-chromophores Kation stehen. Wasserstoff als Ion liegt als Hydroniumion vor. Als nicht-chromophore Kationen kommen beispielsweise Alkalimetallkationen, Ammoniumkationen und Erdalkalimetallkationen in Betracht. Als Erdalkalimetallkationen seinen beispielsweise Calcium und Magnesium genannt. Als Ammoniumkationen können unsubstituiertes Ammonium oder auch Ammoniumionen niedrigmolekularer Amine genannt werden, vomehmlich Mono-, Di- oder Tri-C₁₋₂-alkyl- und/oder -β-hydroxy-C₂₋₃-alkyl-ammonium, beispielsweise Mono-, Di- oder Tri-isopropanolammonium, Mono-, Di- oder Triäthanolammonium, N-Methyl-N-äthanol-ammonium. Als Alkalimetallkationen kommen übliche solche Kationen in Betracht, z.B. Lithium-, Natrium- und/oder Kaliumionen. Unter den genannten Kationen sind die Alkalimetallkationen und Ammoniumkationen bevorzugt. Nach einer Ausführung der Erfindung steht ein Teil der Symbole M und Kat⁺ für Wasserstoff und der restliche Teil davon für Alkalimetall- und/oder Ammoniumkationen.

Die 1:2-Chromkomplexfarbstoffe der Formel (I) können symmetrische oder auch asymmetrische Komplexe sein, d.h., abgesehen von den Bedeutungen von M und Kat⁺, können die beiden Reste R untereinander die gleiche Bedeutung oder unterschiedliche Bedeutungen haben, und/oder die beiden Reste R₁ können untereinander die gleiche Bedeutung oder unterschiedliche Bedeutungen haben. Bevorzugt sind symmetrische Chromkomplexe der Formel (I), d.h. solche worin die beiden Reste R die gleiche Bedeutung haben und worin die beiden Reste R₁ auch die gleiche Bedeutung haben.

Die 1:2-Chromkomplexfarbstoffe der Formel (I) können analog zu an sich bekannten Chromierungsreaktionen hergestellt werden. Insbesondere ist das Verfahren zur Herstellung der 1:2-Chromkomplexfarbstoffe der Fromel (I) dadurch gekennzeichnet, daß man mindestens eine metallisierbare Verbindung, die in einer ihrer tautomeren Formen der Formel 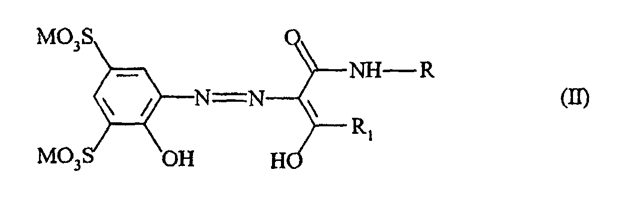 entspricht, mit einer chromabgebenden Verbindung umsetzt.

Die Verbindungen der Formel (II) können durch Kupplung der Diazoverbindung aus 2-Amino-1-hydroxybenzol-4,6-disulfonsäure auf eine Kupplungskomponente, die in einer ihrer tautomeren Formen der Formel 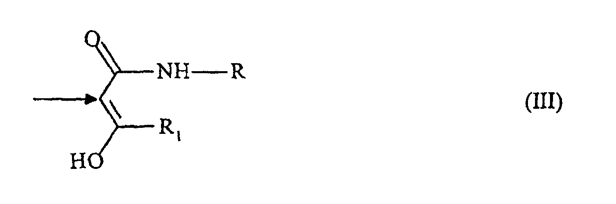 entspricht, hergestellt werden.

Die Verbindungen der Formel (III) sind bekannt oder können auf analoge Weise zu bekannten Methoden durch Acylierung eines Amins der Formel R-NH₂ mit einem Acylessigsäurehalogenid der Formel R₁-CO-CH₂-CO-Hal unter dehydrohalogenierenden Bedingungen hergestellt werden, z.B. bei pH-Werten im Bereich von 3 bis 8, insbesondere 4 bis 6, und bei milden Temperaturen, z.B. im Bereich von 0 bis 70°C, insbesondere 20 bis 60°C, oder, wenn R aromatisch ist, auch durch Umsetzung der jeweiligen Arylamine mit entsprechenden Acylessigsäureestern niedrigmolekularer Alkohole (vorzugsweise Methyl- oder Äthylestern) bei Temperaturen oberhalb 100°C, oder, nach einer bevorzugten Variante, wenn R₁ Methyl bedeutet, durch Umsetzung von Diketen 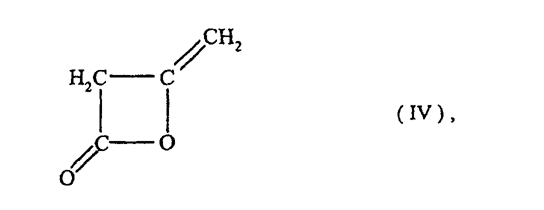 gegebenenfalls als Acetonaddukt, mit entsprechenden Aminen der Formel R-NH₂, in Lösung (z.B. in Wasser oder Aceton), beispielsweise bei Temperaturen im Bereich von 40°C bis Rückfluß.

Die Diazotierung von 2-Amino-1-hydroxybenzol-4,6-disulfonsäure kann auf an sich bekannte Weise erfolgen, insbesondere mit Natriumnitrit in saurem Medium (vorzugsweise bei pH 1 bis 3) und bei niedriger Temperatur, vorzugsweise im Bereich von -5 bis +15°C. Die Kupplung der Diazoniumverbindung auf eine Kupplungskomponente der Formel (III) kann auf an sich bekannte Weise durchgeführt werden, vorteilhaft bei Temperaturen im Bereich von -5 bis +30°C, vorzugsweise unterhalb 25°C, besonders bevorzugt im Bereich von 0 bis 10°C, und unter deutlich alkalischen Bedingungen, vorteilhaft im pH-Bereich von 8 bis 12, vorzugsweise 9 bis 11. Die Umsetzungen können in wäßrigem Medium oder auch in wäßrig/organischem Medium durchgeführt werden, wobei das organische Medium vorzugsweise ein wassermischbares inertes Lösungsmittel ist (z.B. ein Alkohol oder Dioxan).

Für die Chromierung der Verbindungen der Formel (II) zu entsprechenden 1:2-Chromkomplexfarbstoffen der Formel (I) können an sich übliche geeignete Chromverbindungen verwendet werden, wie sie zur Herstellung von Chromkomplexen eingesetzt werden, z.B. Chromhydroxyd oder wasserlösliche Salze von niedrigmolekularen Carbonsäuren oder Mineralsäuren, insbesondere Chromtrichlorid, Chromtrifluorid, Chromisulfat, Chromiformiat, Chromiacetat, Kaliumchromisulfat, Ammoniumchromisulfat (z.B. Chromalaune) und gegebenenfalls, mit Zugabe eines Reduktionsmittels, z.B. Glukose, auch Natrium- oder Kaliumchromat oder -bichromat.

Die Chromierung kann direkt bis zur 1:2-Chromkomplexstufe oder stufenweise über die 1:1-Chromkomplexstufe mit nachfolgender Komplexierung bis zur 1:2-Chromkomplexstufe durchgeführt werden.

Die Chromierung kann in wäßrigem Medium durchgeführt werden, vorzugsweise bei pH-Werten im Bereich von 2 bis 10 und bei Temperaturen im Bereich von 95 bis 130°C, erforderlichenfalls unter Druck. Gegebenenfalls kann die Umsetzung mit Zugabe von organischen Lösungsmitteln oder auch nur in organischen Lösungsmitteln durchgeführt werden. Geeignete organische Lösungsmittel sind vorzugsweise solche, die mit Wasser mischbar sind, einen Siedepunkt oberhalb 100°C haben und worin die Azofarbstoffe und ihre Metallsalze löslich sind, z.B. Glykole, Ätheralkohole oder Amide (z.B. Äthylenglykol, Polyäthylenglykole, β-Äthoxyäthanol, β-Methoxyäthanol, Formamid oder Dimethylformamid). Zur Herstellung von asymmetrischen 1:2-Chromkomplexverbindungen kann die Chromierung stufenweise durchgeführt werden, indem erst der 1:1-Chromkomplex der einen der komplexbildenden Verbindungen hergestellt wird, und daraus mit einem zweiten Komplexbildner dann der 1:2-Chromkomplex hergestellt wird. Die 1:1-Chromkomplexe können auf an sich bekannte Weise hergestellt werden, z.B. unter analogen Bedingungen wie für die 1:2-Chromkomplexe, aber vorzugsweise unter stärker sauren pH-Werten, vorteilhaft bei pH < 3. Die Herstellung der 1:2-Chromkomplexe erfolgt dann vorteilhaft bei pH-Werten im Bereich von 3 bis 10, vorzugsweise 4 bis 9.

Nach Durchführung der erforderlichen Kupplung und Metallisierung und erforderlichenfalls Salzbildung oder lonenaustausch zur Einführung von Kationen M bzw. Kat⁺, können die erhaltenen Farbstoffe oder Farbstoffgemische auf an sich bekannte Weise von der Mutterlauge isoliert werden, z.B. durch Aussalzen oder Aussäuern mit einer starken mineralischen Säure und Filtrieren, oder z.B. durch Membranfiltration der Farbstofflösung (entweder der Farbstofflösung, so wie sie hergestellt worden ist, oder auch der Lösung des filtrierten Farbstoffes), und gewünschtenfalls Trocknen (z.B. durch Zerstäuben) der gegebenenfalls durch Membranfiltration entsalzten Farbstofflösung. Gewünschtenfalls kann der Farbstoff mit einem an sich bekannten üblichen Coupagemittel verschnitten werden, z.B. mit nicht-elektrolytartigen Coupagemitteln; der durch Membranfiltration entsalzte Farbstoff kann gewünschtenfalls mit nicht-elektrolytartigen Coupagemitteln (vornehmlich Harnstoff oder/und Oligosacchariden, z.B. Dextrinen), vor oder nach der Trocknung (z.B. Zerstäubung), verschnitten werden. Gewünschtenfalls können den Farbstoffen anionische Tenside, insbesondere Kohlenwasserstoffsulfonate oder sonstige organische Sulfonate, z.B. sulfoniertes Rizinusöl, Sulfosuccinate oder Ligninsulfonate, zugegeben werden. Wenn ein Tensid verwendet wird, beträgt das Gewichtsverhältnis des Tensids zum reinen Farbstoff vorteilhaft Werte im Bereich von 2:98 bis 10:90. Für Flüssigformulierungen werden die Farbstoffe, vorteilhaft in entsalzter Form und ohne Coupagezusätze, als konzentrierte Lösungen hergestellt, worin der Farbstoffgehalt vorteilhaft im Bereich von 5 bis 35 Gewichtsprozent, vorzugsweise 10 bis 25 Gewichtsprozent, bezogen auf das Gewicht des Präparates, liegt. Gegebenenfalls kann auch ein Zusatz zur Bekämpfung der schädigenden Wirkung von Mikroorganismen zugegeben werden (z.B. ein Mittel das die Mikroorganismen abtötet, d.h. ein Biozid bzw. Mikrobizid, oder das deren Wachstum hemmt, d.h. vornehmlich ein bakterien-, pilzoder/und hefenwachstumhemmender Zusatz), z.B. in Konzentrationen von 0,001 bis 1 Gew.-% bezogen auf die gesamte Flüssigformulierung.

Die Farbstoffe der Formel (I), insbesondere in Form ihrer Salze, vor allem Alkalimetall- und/oder Ammoniumsalze, sind sehr gut wasserlöslich und in Trockenform oder auch in der Form ihrer auch konzentrierten Lösungen sehr gut lager- und transportbeständig. Sie dienen als anionische Farbstoffe, insbesondere zum Färben von künstlich erzeugten Oxydschichten auf Aluminium oder Aluminiumlegierungen.

Als Aluminiumlegierungen kommen vornehmlich solche in Betracht, in welchen der Aluminiumanteil überwiegt, vor allem Legierungen mit Magnesium, Silicium, Zink und/oder Kupfer, z.B. Al/Mg, Al/Si, Al/Mg/Si, Al/Zn/Mg, Al/Cu/Mg und Al/Zn/Mg/Cu, vorzugsweise solche, in welchen der Aluminiumgehalt mindestens 90 Gewichtsprozent ausmacht; der Magnesiumgehalt beträgt vorzugsweise ≤ 6 Gewichtsprozent; der Siliciumgehalt beträgt vorzugsweise ≤ 6 Gewichtsprozent; der Zinkgehalt beträgt vorzugsweise ≤ 10 Gewichtsprozent; der Kupfergehalt beträgt vorteilhaft ≤ 2 Gewichtsprozent, vorzugsweise ≤ 0,2 Gewichtsprozent.

Die auf dem metallischen Aluminium oder auf den Aluminiumlegierungen gebildeten Oxydschichten können durch chemische Oxydation oder vorzugsweise auf galvanischem Wege durch anodische Oxydation erzeugt worden sein. Die anodische Oxydation des Aluminiums bzw. der Aluminiumlegierung zur Passivierung und Bildung einer porösen Schicht, kann nach bekannten Methoden erfolgen, unter Verwendung von Gleichstrom und/oder Wechselstrom, und unter Verwendung jeweils geeigneter Elektrolytbäder, z.B. unter Zusatz von Schwefelsäure, Oxalsäure, Chromsäure, Zitronensäure oder Kombinationen von Oxalsäure und Chromsäure oder Schwefelsäure und Oxalsäure. Solche Anodisierverfahren sind in der Technik bekannt, z.B. das GS-Verfahren (Gleichstrom; Schwefelsäure), das GSX-Verfahren (Gleichstrom; Schwefelsäure mit Zusatz von Oxalsäure), das GX-Verfahren (Gleichstrom; Oxalsäure), das GX-Verfahren unter Zusatz von Chromsäure, das WX-Verfahren (Wechselstrom; Oxalsäure), das WX-GX-Verfahren (Oxalsäure; erst Wechselstrom dann Gleichstrom), das WS-Verfahren (Wechselstrom; Schwefelsäure) und das Chromsäureverfahren (Gleichstrom; Chromsäure). Die Stromspannungen liegen z.B. im Bereich von 5 bis 80 Volt, vorzugsweise 8 bis 50 Volt; die Temperaturen liegen z.B. im Bereich von 5 bis 50°C; die Stromdichte an der Anode liegt z.B. im Bereich von 0,3 bis 5 A/dm², vorzugsweise 0,5 bis 4 A/dm², wobei im allgemeinen Stromdichten ≤ 2 A/dm² bereits geeignet sind, um eine poröse Oxydschicht zu erzeugen; bei höheren Spannungen und Stromdichten, z.B. im Bereich von 100 bis 150 Volt und ≥ 2 A/dm², besonders 2 bis 3 A/dm², und bei Temperaturen bis 80°C können besonders harte und feinporige Oxydschichten erzeugt werden, z.B. nach dem "Ematal" Verfahren mit Oxalsäure in Gegenwart von Titanium- und Zirkoniumsalzen. Bei der Herstellung von Oxydschichten, die anschließend elektrolytisch oder direkt mit einem Farbstoff der Formel (I) adsorptiv eingefärbt werden, liegt nach einer bevorzugten und in der Praxis an sich üblichen Verfahrensweise die Stromspannung im Bereich von 12 bis 20 Volt; die Stromdichte beträgt dabei vorzugsweise 1 bis 2 A/dm². Diese Anodisierverfahren sind in der Technik allgemein bekannt und in der Fachliteratur auch ausführlich beschrieben, z.B. in Ullmann's "Enzyklopädie der Technischen Chemie", 4. Auflage, Band 12, Seiten 196 bis 198, oder in den Sandoz-Broschüren "Sanodal®" (Sandoz AG, Basel, Schweiz, Publikations-No. 9083.00.89) oder "Ratgeber für das Adsorptive Färben von Anodisiertem Aluminium" (Sandoz, Publikations-No. 9122.00.80). Die Schichtdicke der porösen Oxydschicht liegt vorteilhaft im Bereich von 2 bis 35 µm, vorzugsweise 2 bis 25 µm. Im Falle der Farbanodisation beträgt die Dicke der Oxydschicht vorteilhaft Werte im Bereich von 5 bis 60 µm, vorzugsweise 10 bis 40 µm. Die Farbstoffe der Formel (I) sind auch für dünne Oxydschichten, z.B. solche ≤ 10 µm geeignet, sowie für solche, die anodisch gefärbt worden sind. Wenn das anodisierte Aluminium oder die anodisierte Aluminiumlegierung vor dem Färben für eine kurze Zeit (z.B. 1 Woche oder weniger) gelagert worden ist, ist es von Vorteil, das Substrat vor dem Färben zu benetzen und/oder zu aktivieren, z.B. durch eine Behandlung mit einer nicht-reduzierenden, wäßrigen Mineralsäure, z.B. mit Schwefelsäure oder Salpetersäure. Gewünschtenfalls kann die Oxydschicht - analog dem bekannten "Sandalor®" Verfahren - zuerst elektrolytisch vorgefärbt werden, z.B. in einem Bronzefarbton, und anschließend mit einem Farbstoff der Formel (I) überfärbt werden; auf diese Weise sind besonders gedeckte Farbtöne erhältlich, die z.B. in der Außenarchitektur eine besonders geeignete Verwendung finden. Auch ist es möglich durch Farbanodisation (nach dem als Integral färbung bekannten Verfahren) vorgefärbte Oxydschichten mit einem Farbstoff der Formel (I) zu überfärben; auch auf diese Weise sind sehr gedeckte Farbtöne erhältlich, die z.B. besonders für die Außenarchitektur geeignet sind.

Zur Färbung der Oxydschicht mit den Farbstoffen der Formel (I) können an sich übliche Färbemethoden verwendet werden, insbesondere Adsorptionsmethoden, wobei die Farbstofflösung z.B. auf die Oxydfläche aufgetragen werden kann, beispielsweise durch Aufsprühen oder durch Auftrag mit einer Walze (je nach Form des Substrates), oder vorzugsweise durch Eintauchen des zu färbenden Gegenstandes in ein Färbebad. Nach einer Ausführungsform des erfindungsgemäßen Färbeverfahrens können die anodisierten Metallgegenstände nach der anodischen Behandlung und dem Spülen im selben Gefäß, in welchem die Anodisierung stattgefunden hat, mit dem Färbebad behandelt werden, oder, nach einer weiteren Ausführungsform, können die zu färbenden Gegenstände nach der anodischen Behandlung und dem Spülen aus dem Gefäß herausgenommen werden und entweder direkt oder nach dem Trocknen und einer eventuellen Zwischenlagerung, in einer zweiten Anlage gefärbt werden, wobei, wenn die Gegenstände zwischengelagert wurden, empfohlen wird, vor dem Färben eine Aktivierung (z.B. durch eine kurze Behandlung mit Schwefelsäure oder Salpetersäure) durchzuführen. Hierzu wird bemerkt, daß eine Zwischenlagerung - wenn sie überhaupt erfolgt - vorzugsweise für eine beschränkte, kurze Zeit erfolgt, z.B. weniger als 1 Woche, besonders ≤ 2 Tage. Nach allgemein üblichen bevorzugten Verfahren wird unmittelbar nach Anodisation und anschließendem Spülen gefärbt.

Das Färben erfolgt zweckmäßig bei Temperaturen unterhalb des Siedepunktes der Flotte, vorteilhaft bei Temperaturen im Bereich von 15 bis 80°C, vorzugsweise im Bereich von 20 bis 75°C, besonders bevorzugt 20 bis 60°C. Der pH der Färbeflotte liegt beispielsweise im deutlich sauren bis schwach basischen Bereich, beispielsweise im pH-Bereich von 3 bis 8, wobei schwach saure bis nahezu neutrale Bedingungen bevorzugt sind, insbesondere im pH-Bereich von 4 bis 6. Die Farbstoffkonzentration und die Färbedauer können je nach Substrat und gewünschtem färberischen Effekt sehr stark variieren. Es eignen sich beispielsweise Farbstoffkonzentrationen im Bereich von 0,01 bis 20 g/l, vorteilhaft 0,1 bis 10 g/l, insbesondere 0,2 bis 2 g/l. Die Färbedauer kann beispielsweise im Bereich von 20 Sekunden bis 1 Stunde, vorteilhaft 5 bis 40 Minuten liegen, wobei bei Farbstoffkonzentrationen, pH-Werten und Temperaturen in den bevorzugten Bereichen, auf Oxydschichten einer Stärke im Bereich von 5 bis 25 µm, bei einer Färbedauer von 5 bis 30 Minuten bereits sehr schöne, intensive Färbungen erhältlich sind. Da die erfindungsgemäß einzusetzenden Farbstoffe sehr gut wasserlöslich sind, können damit auch beliebig konzentrierte Stammlösungen oder Verstärkerflotten hergestellt werden, um die Farbstoffkonzentration im Färbebad beliebig, je nach Bedarf, einzustellen bzw. zu korrigieren.

Vor dem Verdichten wird das gefärbte Substrat vorteilhaft mit Wasser gespült. Zum Verdichten können beliebige, an sich übliche bekannte Methoden verwendet werden, gegebenenfalls unter Zuhilfenahme geeigneter Zusätze. Die Verdichtung kann, z.B. ein- oder zweistufig durchgeführt werden, wobei, wenn zweistufig verfahren wird, die erste Stufe vorteilhaft aus einer Heißwasserbehandlung besteht (beispielsweise im Temperaturbereich von 70 bis 90°C). Für die zweite Stufe (Nachverdichten bzw. Hauptverdichten) oder für das einstufige Verfahren kann beispielsweise mit entionisiertem Wasser verkocht werden (beispielsweise bei Temperaturen ≥ 95°C, pH-Werten im Bereich von 5,5 bis 6, und einer Behandlungsdauer von 30 bis 60 Minuten), oder es kann eine Dampfbehandlung, z.B. bei 4 bis 6 bar Überdruck erfolgen. Nach einer weiteren Verfahrensweise kann, z.B. bei pH-Werten im Bereich von 4,5 bis 8, unter Zuhilfenahme von Metallsalzen oder -oxyden (z.B. Nickelacetat oder Kobaltacetat) oder noch mit Chromaten, ein- oder zweistufig verdichtet werden. Durch ein solches Verdichten mit Metallverbindungen (z.B. mit Nickelacetat) kann ein Ausbluten des Farbstoffes besonders gut unterdrückt werden. Nach einer weiteren Verfahrensweise wird unter Zuhilfenahme organischer Verdichtungsmittel, z.B. organischer Phosphonate und Diphosphonate oder noch wasserlöslicher (cyclo)aliphatischer Polycarbonsäuren oder aromatischer ortho-Hydroxycarbonsäuren (z.B. wie in der DE-A-3327191 beschrieben) z.B. bei pH-Werten im Bereich von 4,5 bis 8, verfahren. Die Verdichtungsmittel können in sehr niedrigen Konzentrationen eingesetzt werden, beispielsweise in Konzentrationen von 0,001 bis 2 g/l, vorzugsweise 0,002 bis 0,1 g/l. Die Verdichtungstemperatur kann je nach verwendetem Hilfsmittel und gewähltem Verfahren variieren, beispielsweise im Bereich von 20 bis 100°C, für Heißverdichtungen z.B. im Bereich von 60 bis 100°C, vorteilhaft 80 bis 100°C, für Kaltverdichtungen z.B. bei Temperaturen im Bereich von 20 bis 30°C, wobei Nickelsalze oder Kobaltsalze in Kombination mit Alkalimetallfluoriden, z.B. NaF, besonders auch für eine Kaltverdichtung verwendet werden können, beispielsweise bei 20 - 30°C. Gewünschtenfalls können die gefärbten und verdichteten Aluminiumoxydschichten bzw. Aluminiumlegierungoxydschichten nachträglich beschichtet werden, z.B. mit Wachsen, Harzen, Ölen, Paraffinen oder Kunststoffen, vorausgesetzt, daß diese Beschichtung durchsichtig ist.

Zur Einstellung der pH-Werte in den Färbebädern und Verdichtungslösungen können an sich übliche, bekannte Zusätze verwendet werden, z.B. Schwefelsäure, Essigsäure, Ammoniak, Natriumhydroxyd oder -carbonat, und/oder Natriumacetat. Gegebenenfalls, bzw. erforderlichenfalls, können belagverhindemde ("antismut" oder auch "Anti-Schmant") Zusätze verwendet werden und/oder Tenside (z.B. Netzmittel), insbesondere anionische Tenside wie C₉₋₁₄-Alkansulfonate, Mono- oder Dialkylbenzolsulfonate, worin die Alkylreste insgesamt 4 bis 18 Kohlenstoffatome enthalten, und oligomere Kondensationsprodukte aus Formaldehyd und Naphthalinsulfonsäuren.

Die mit den Farbstoffen der Formel (I) erhältlichen Färbungen weisen sehr schöne, leuchtend gelbe Nuancen auf, und zeichnen sich durch ihre hohen Echtheiten, vor allem Lichtechtheiten, aus (auch Naßlichtechtheit und Witterungsechtheit), besonders diejenigen, worin R einen Rest der Formel (a) bedeutet, vor allem worin die Formel (a) unsubstituiertes Phenyl bedeutet.

In den folgenden Beispielen bedeuten die Teile Gewichtsteile und die Prozente Gewichtsprozente; die Temperaturen sind in Celsiusgraden angegeben. 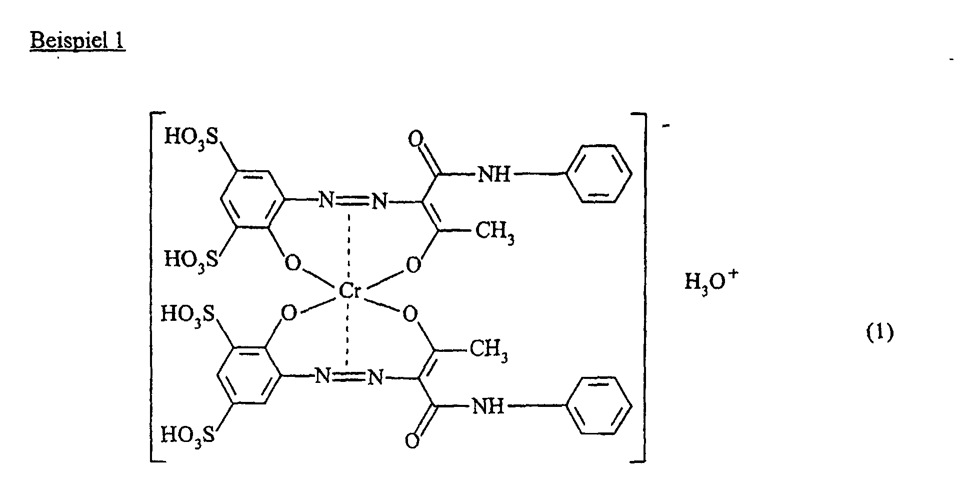 13,45 g (0,05 Mol) 2-Amino-1-hydroxybenzol-4,6-disulfonsäure gibt man in 25 ml Wasser und stellt mit 3 ml Salzsäure auf einen sauren pH-Bereich ein. Unter Eiskühlung gibt man 3,5 g (0,0507 Mol) Natriumnitrit gelöst in 5 ml Wasser zu und rührt 2 Stunden zwischen 0° und 10°C nach. Der Überschuß an Nitrit wird mit wenig Aminosulfonsäure zerstört. Diese Diazoniumsalzlösung wird bei einer Temperatur zwischen 0° und 10°C zu einer Lösung aus 8,86 g (0,05 Mol) Acetessigsäureanilid, 8 g Soda und 5 ml 30 %-iger Natronlauge in 30 ml Wasser, dem 30 g Eis zugefügt sind, zugetropft. Man rührt während 4 Stunden nach. In diese Reaktionslösung gibt man 5 ml Ameisensäure und 0,025 Mol Chromsulfat. Man stellt mit 7 ml 30 %-iger Natronlauge den pH-Wert auf 5 bis 6 und kocht während 6 Stunden. Man fällt mit Kaliumchlorid aus und filtriert. Man erhält in 90 %-iger Ausbeute den Chromkomplexfarbstoff in Form des Natrium/Kaliumsalzes.

Der hergestellte Farbstoff kann gewünschtenfalls durch Membranfiltration entsalzt werden.

Die maximale Lichtabsorption λₘₐₓ des Farbstoffes gemessen als Lösung einer Konzentration von 22,28 mg/l in 1 %-iger Natriumcarbonatlösung, liegt bei 465,3 nm. Die spezifische Extinktion beträgt dabei 26930 cm²/g.

Analog wie im Beispiel 1 beschrieben, werden die in der folgenden Tabelle aufgezählten Farbstoffe hergestellt, die in Form der freien Säure der folgenden Formel (2) entsprechen 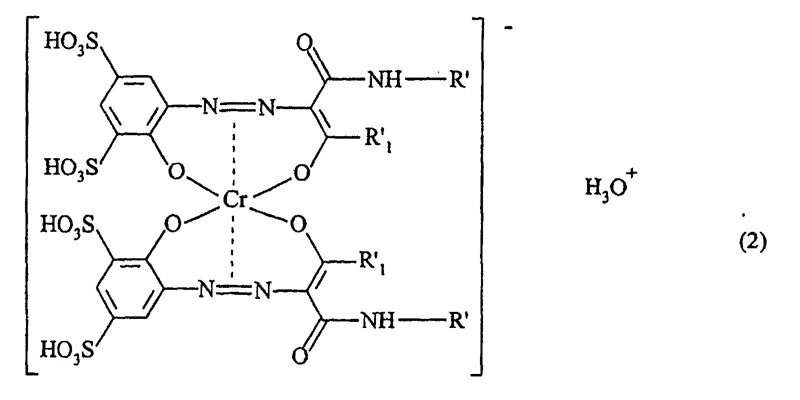 welche analog Beispiel 1 in Form ihrer Natrium/Kalium-Salze erhalten werden, und auf anodisiertem Aluminium, gelbe Färbungen ergeben.

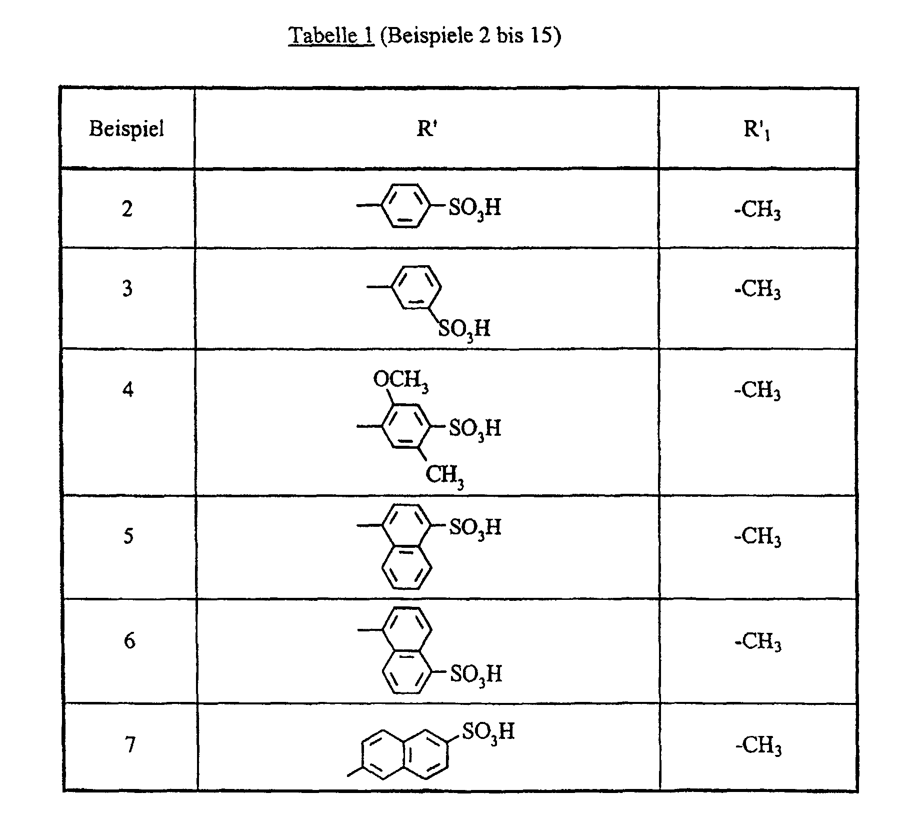

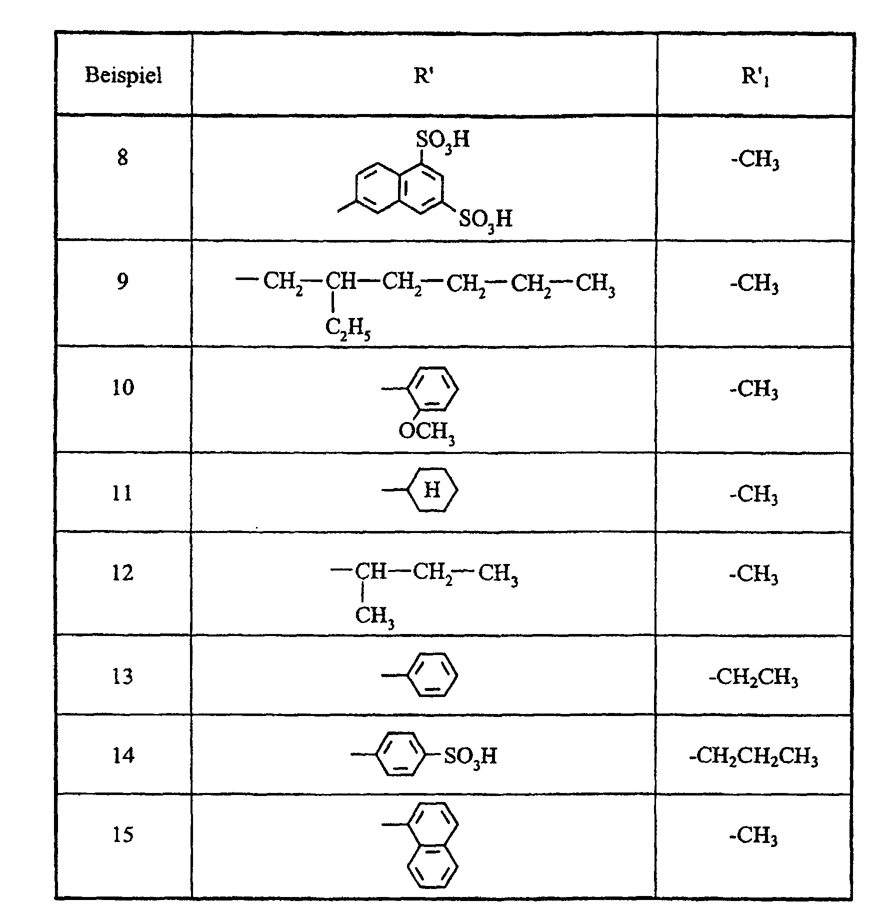

Durch Verwendung entsprechender Basen zur Neutralisation und Salze zur Ausfällung können die Farbstoffe der Beispiele 1 bis 15 auch in Form ihrer Ammonium- und/oder Lithiumsalze erhalten werden. Durch Aussäuern, z.B. mit Schwefelsäure, Filtrieren und Neutralisieren des ausgesäuerten Farbstoffes mit Triäthanolamin können die Farbstoffe in entsprechender Aminsalzform erhalten werden.

### Applikationsbeispiel A

Ein entfettetes und desoxydiertes Werkstück aus Reinaluminiumblech wird in einer wäßrigen Schwefelsäure und Aluminiumsulfat enthaltenden Lösung einer Konzentration von 17 bis 22 % Schwefelsäure und 0,5 bis 1,5 % Aluminiumionen, bei einer Temperatur von 18 bis 20°C, bei einer Spannung von 15 bis 17 Volt mit Gleichstrom einer Dichte von 1,5 A/dm², während 50 Minuten anodisch oxydiert. Dabei wird eine Oxydschicht von ca. 20 µm Dicke gebildet. Nach dem Spülen mit Wasser, wird das Aluminiumblechwerkstück für 20 Minuten bei 60°C in einem Färbebad, enthaltend in 1000 Teilen entionisiertem Wasser 0,5 Teile des gemäß Beispiel 1 hergestellten Chromkomplexfarbstoffes, bei einem pH von 5,5 bis 5,7 (eingestellt mit Essigsäure und Natriumacetat) gefärbt. Das gefärbte Werkstück wird mit Wasser gespült und dann für 60 Minuten bei 98 bis 100°C in entionisiertem Wasser verdichtet. Um die Bildung eines eventuell störenden Belags während der Verdichtung zu vermeiden, kann dem zum Verdichten eingesetzten entionisierten Wasser ein belagverhindernder Zusatz (Antischmantmittel) zugegeben werden. Man erhält ein gelb gefärbtes Werkstück, das sich durch seine hervorragende Licht- und Wetterechtheit auszeichnet.

### Applikationsbeispiel B

Man verfährt wie im Applikationsbeispiel A beschrieben, mit dem Unterschied, daß die Verdichtung mit einer Lösung durchgeführt wird, die 3 Teile Nickelacetat in Kombination mit 0,5 Teilen oligomerem Kondensationsprodukt aus Naphthalinsulfonsäure und Formaldehyd in 1000 Teilen Wasser enthält. Es wird eine gelbe Färbung hervorragender Licht- und Wetterechtheit erhalten.

### Applikationsbeispiel C

Man verfährt wie im Applikationsbeispiel B beschrieben, mit dem Unterschied, daß statt 20 Minuten bei 60°C, 40 Minuten bei 40°C gefärbt wird. Es wird eine gelbe Färbung hervorragender Licht- und Wetterechtheit erhalten.

### Applikationsbeispiel D

Ein entfettetes Werkstück aus Peraluman 101 (Aluminiumlegierung mit 1 % Mg und 0,5 % Si) Blech wird in einer wäßrigen, Schwefelsäure und Aluminiumsulfat enthaltenden Lösung einer Konzentration von 18 bis 20 % Schwefelsäure und 0,5 bis 1,5 % Aluminiumionen, bei einer Temperatur von 18 bis 20°C, bei einer Spannung von 15 bis 17 Volt mit Gleichstrom einer Dichte von 1,5 A/dm², während 50-60 Minuten anodisch oxydiert. Dabei wird eine Oxydschicht von ca. 22-24 µm Dicke gebildet. Nach kurzem Spülen wird das anodisierte Aluminium in einer wäßrigen Lösung der folgenden Komponenten

| | |
|---|---|
| 15-20 g/l | Zinn-(II)-sulfat |
| 15-20 g/l | Schwefelsäure |
| und 25 g/l | eines handelsüblichen Zinnbadstabilisators |

elektrolytisch gefärbt. Dabei wird das Werkstück während 2 Minuten bei 20-25°C in der Lösung ohne Strombelastung belassen und danach bei einer Spannung von 16 Volt elektrolytisch gefärbt. Man erhält eine mittelbronzefarbene Einfärbung. Nach gründlichem Spülen in fließendem Wasser, wird das Werkstück für 20 Minuten bei 60°C in einem Färbebad, enthaltend in 1000 Teilen entionisiertem Wasser 1 Teil des gemäß Beispiel 1 hergestellten Chromkomplexfarbstoffes, bei einem pH von 5,5 (eingestellt mit Essigsäure und Natriumacetat) gefärbt. Das gefärbte Werkstück wird mit Wasser gespült und dann für 60 Minuten bei 98 bis 100°C in einer wäßrigen 0,3 %-igen Nickelacetatlösung, deren pH mit Essigsäure auf 5,5-6 gestellt ist, verdichtet. Man erhält ein bronze-gelb gefärbtes Werkstück, das sich durch seine hervorragende Licht- und Wetterechtheit auszeichnet.

Analog wie der Farbstoff gemäß Beispiel 1 werden in den Applikationsbeispielen A, B, C und D die Farbstoffe eines jeden der Beispiele 2 bis 15 eingesetzt. Es werden nach der Vorschrift der Applikationsbeispiele A, B und C gelbe Färbungen und nach der Vorschrift des Applikationsbeispiels D bronzegelbe bis bronzebraune Färbungen erhalten, die sich durch ihre Licht- und Wetterechtheiten auszeichnen.

Die Lichtechtheit kann nach ISO-Vorschriften bestimmt werden, z.B. nach der ISO-Vorschrift Nr. 2135-1984 durch Trockenbelichten einer Probe in Belichtungszyklen von je 200 Stunden Normlichtbelichtung in einem Atlas-Weather-O-meter 65 WRC, der mit einer Xenonbogenlampe versehen ist, oder nach der ISO-Vorschrift Nr. 105 B02 (USA) durch Trockenbelichten einer Probe in Belichtungszyklen von je 100 Stunden Normlichtbelichtung in einem Atlas-Weather-O-meter Ci 35 A, der mit einer Xenonbogenlampe versehen ist, und Vergleich der belichteten Proben mit einem Benotungsmuster der Lichtechtheitsnote = 6 des Blaumaßstabes (entsprechend ca. der Note 3 nach Graumaßstab), oder direkt mit der Blaumaßstabvorlage der Note 6. Wenn ein Lichtechtheitswert entsprechend der Note 6 gemäß Blaumaßstab erst nach 2 Belichtungszyklen erreicht wird, wird das Muster als mit einer Lichtechtheitsnote = 7 bewertet; wenn dieser Punkt erst nach 4 Zyklen erreicht wird, wird dem Muster eine Echtheitsnote von 8 zugeteilt, und so weiter, wie in der folgenden Tabelle 2 dargelegt.

**Tabelle 2**

| Belichtungszyklus | Belichtungszeit | | Lichtechtheitsnote |
|---|---|---|---|
| | 65 WRC | Ci 35 A | |
| 1 | 200 Stunden | 100 Stunden | 6 |
| 2 | 400 Stunden | 200 Stunden | 7 |
| 4 | 800 Stunden | 400 Stunden | 8 |
| 8 | 1600 Stunden | 800 Stunden | 9 |
| 16 | 3200 Stunden | 1600 Stunden | 10 |

Nach 8 Belichtungszyklen sind alle mit den Farbstoffen der Beispiele 1 - 15 nach den Applikationsbeispielen A, B, C und D erhaltenen Färbungen unverändert, während die vergleichsweise mit dem Farbstoff von Beispiel 10 der CH-A 396256 analog den Applikationsbeispielen B und C erhaltenen Färbungen nach dem ersten Belichtungszyklus bereits ausgeblichen waren (entsprechend einer Lichtechtheitsnote = 1).

## Patentansprüche

1. 1:2-Chromkomplexfarbstoffe der Formel 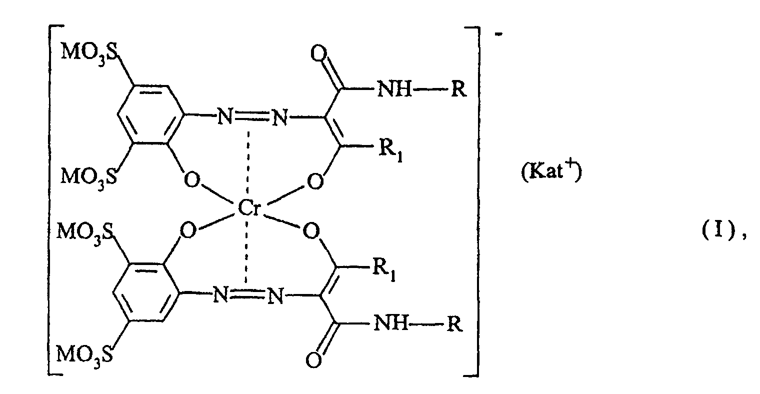 worin
R C₁₋₉-Alkyl oder einen Rest der Formel 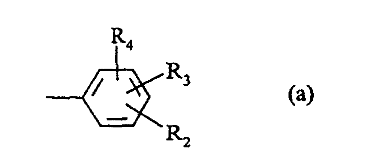 oder 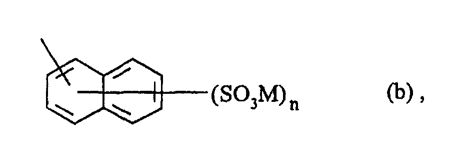
R₁ C₁₋₄-Alkyl,
R₂ Wasserstoff oder -SO₃M,
R₃ Wasserstoff, Methyl oder Methoxy,
R₄ Wasserstoff, Methyl, Methoxy oder Chlor,
n 0 bis 3,
M Wasserstoff oder ein nicht-chromophores Kation
und
Kat⁺ Wasserstoff oder ein nicht-chromophores Kation
bedeuten.

2. 1:2-Chromkomplexfarbstoffe der Formel (I) gemäß Anspruch 1, worin
R C₄₋₈-Isoalkyl, gegebenenfalls mit 1-3 Methylgruppen substituiertes Cyclohexyl, 4- oder 5-Sulfonaphthyl-1 oder einen Rest der Formel (a),
R₁ Methyl,
R₂ Wasserstoff oder -SO₃M,
R₃ Wasserstoff,
R₄ Wasserstoff,
M Wasserstoff oder ein Ammonium- oder Alkalimetallkation
und
Kat⁺ Wasserstoff oder ein Ammonium- oder Alkalimetallkation
bedeuten.

3. Verfahren zur Herstellung der 1:2-Chromkomplexfarbstoffe gemäß Anspruch 1, **dadurch gekennzeichnet, daß** man mindestens eine metallisierbare Verbindung, die in einer ihrer tautomeren Formen der Formel 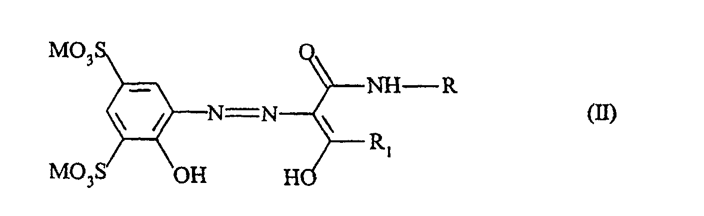 entspricht, mit einer chromabgebenden Verbindung umsetzt.

4. Farbstoffpräparate enthaltend einen Farbstoff der Formel (I) gemäß Anspruch 1 oder 2 und gegebenenfalls Coupage und/oder weitere Zusätze.

5. Farbstoffpräparat gemäß Anspruch 4, welches eine wäßrige konzentrierte Lösung eines Farbstoffes der Formel (I) ist oder ein trockenes Granulat ist.

6. Verwendung der Farbstoffe der Formel (I) gemäß Anspruch 1 oder 2, gegebenenfalls in Form eines Präparates gemäß Anspruch 4 oder 5, zum Färben von künstlich erzeugten Oxydschichten auf Aluminium oder Aluminiumlegierungen.

7. Verwendung nach Anspruch 6 zum Färben von anodisiertem Aluminium und/oder anodisierten Aluminiumlegierungen.

8. Verwendung nach Anspruch 7, **dadurch gekennzeichnet, daß** die Oxydschicht, vor dem Färben mit Farbstoffen der Formel (I), elektrolytisch gefärbt wird.

9. Verwendung nach einem der Ansprüche 6 bis 8, **dadurch gekennzeichnet daß**, nach dem Färben mit Farbstoffen der Formel (I), die poröse gefärbte Oxydschicht verdichtet wird.

10. Die nach dem Verfahren gemäß einem der Ansprüche 6 bis 9 gefärbten Oxydschichten.

## Claims

1. 1:2 chromium complex dyes of the formula 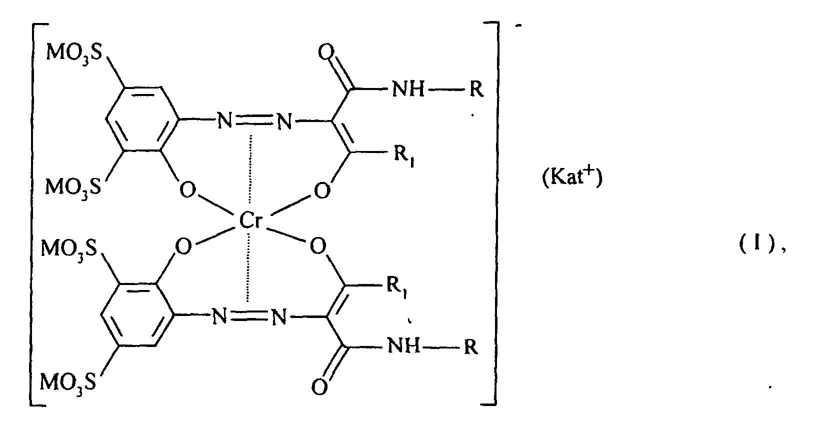 in which
R signifies C₁₋₉-alkyl or a radical of the formula 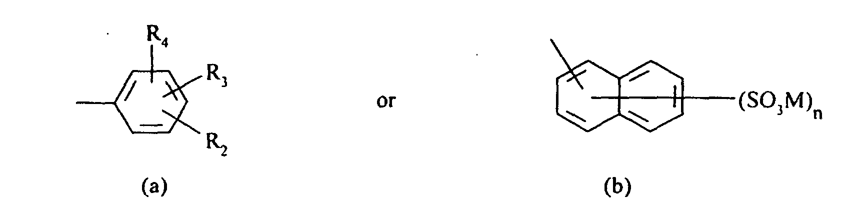
R₁ signifies C₁₋₄-alkyl,
R₂ signifies hydrogen or -SO₃M,
R₃ signifies hydrogen, methyl or methoxy,
R₄ signifies hydrogen, methyl, methoxy or chloro,
n signifies from 0 to 3,
M signifies hydrogen or a non-chromophoric cation, and
Kat⁺ signifies hydrogen or a non-chromophoric cation.

2. 1:2 chromium complex dyes of the formula (I) according to Claim 1, in which
R signifies C₄₋₈-isoalkyl, cyclohexyl optionally substituted with 1-3 methyl groups, 4- or 5-sulpho-1-naphthyl or a radical of the formula (a),
R₁ signifies methyl,
R₂ signifies hydrogen or -SO₃M,
R₃ signifies hydrogen,
R₄ signifies hydrogen,
M signifies hydrogen or an ammonium or alkali metal cation, and
Kat⁺ signifies hydrogen or an ammonium or alkali metal cation.

3. Process for the production of the 1:2 chromium complex dyes according to Claim 1, **characterized in that** at least one metallizable compound which corresponds in one of its tautomeric forms to the formula 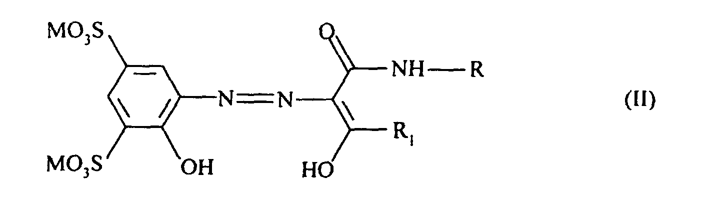 is reacted with a chromium donor compound.

4. Dye compositions containing a dye of the formula (I) according to Claim 1 or 2 and optionally extenders and/or further additives.

5. Dye composition according to Claim 4, which is an aqueous concentrated solution of a dye of the formula (I) or is a dry granular product.

6. Use of the dyes of the formula (I) according to Claim 1 or 2, optionally in the form of a composition according to Claim 4 or 5, for the dyeing of artificially produced oxide layers on aluminium or aluminium alloys.

7. Use according to Claim 6 for the dyeing of anodized aluminium and/or anodized aluminium alloys.

8. Use according to Claim 7, **characterized in that** the oxide layer is electrolytically dyed prior to dyeing with dyes of the formula (I).

9. Use according to one of Claims 6 to 8, **characterized in that**, after dyeing with dyes of the formula (I), the porous dyed oxide layer is sealed.

10. The oxide layers dyed by the process according to one of Claims 6 to 9.

## Revendications

1. Colorants complexes de chrome 1:2 répondant à la formule 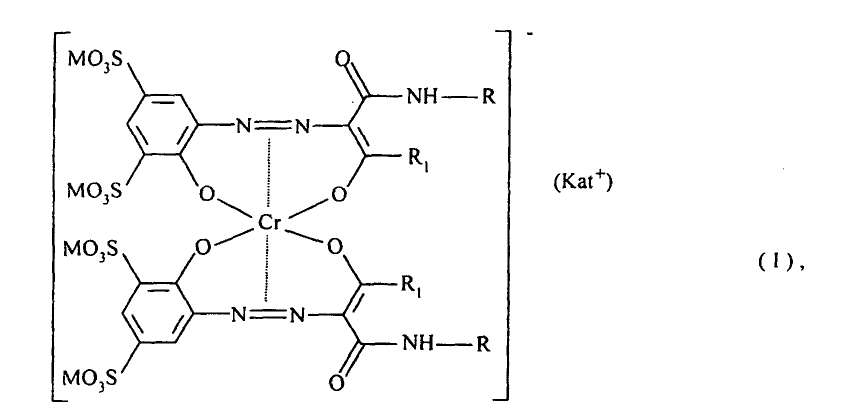 dans laquelle
R signifie un groupe alkyle en C₁-C₉ ou un reste de formule 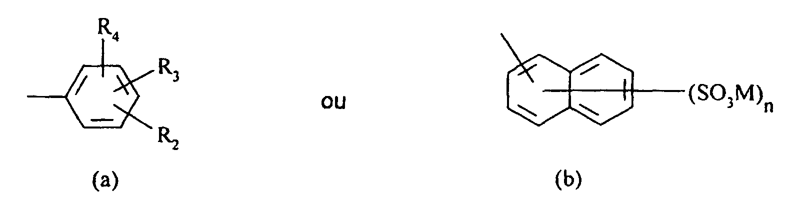
R₁ signifie un groupe alkyle en C₁-C₄,
R₂ signifie l'hydrogène ou un groupe -SO₃M,
R₃ signifie l'hydrogène ou un groupe méthyle ou méthoxy,
R₄ signifie l'hydrogène, un groupe méthyle, un groupe méthoxy ou le chlore,
n signifie un nombre de 0 à 3,
M signifie l'hydrogène ou un cation non chromophore, et
Kat⁺ signifie l'hydrogène ou un cation non chromophore.

2. Colorants complexes de chrome 1:2 répondant à la formule (I) selon la revendication 1, dans laquelle
R signifie un groupe isoalkyle en C₄-C₈, un groupe cyclohexyle éventuellement substitué par 1 à 3 groupes méthyle, un groupe 4- ou 5-sulfo-1-naphtyle ou un reste de formule (a),
R₁ signifie un groupe méthyle,
R₂ signifie l'hydrogène ou un groupe -SO₃M,
R₃ signifie l'hydrogène,
R₄ signifie l'hydrogène,
M signifie l'hydrogène ou un cation ammonium ou d'un métal alcalin, et
Kat⁺ signifie l'hydrogène ou un cation ammonium ou d'un métal alcalin.

3. Procédé pour la préparation des colorants complexes de chrome 1:2 selon la revendication 1, **caractérisé en ce que** l'on fait réagir au moins un composé métallisable qui correspond, sous l'une de ses formes tautomères, à la formule 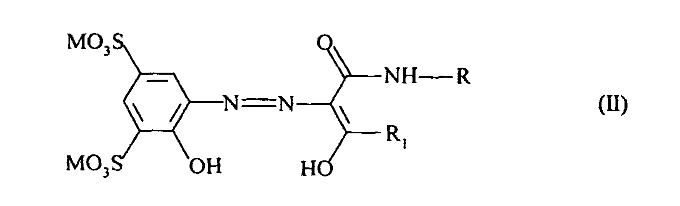 avec un composé donneur de chrome.

4. Préparations de colorant contenant un colorant de formule (I) selon la revendication 1 ou 2 et éventuellement un agent de coupage et/ou d'autres additifs.

5. Une préparation de colorant selon la revendication 4, qui est une solution aqueuse concentrée d'un colorant de formule (I) ou un granulé sec.

6. Utilisation des colorants de formule (I) selon la revendication 1 ou 2, éventuellement sous la forme d'une préparation selon la revendication 4 ou 5, pour la teinture des couches d'oxyde produites artificiellement sur l'aluminium ou les alliages d'aluminium.

7. Utilisation selon la revendication 6 pour la teinture de l'aluminium anodisé et/ou des alliages d'aluminium anodisés.

8. Utilisation selon la revendication 7, **caractérisée en ce que** la couche d'oxyde, avant la teinture avec les colorants de formule (I), est teinte par voie électrolytique.

9. Utilisation selon l'une des revendications 6 à 8, **caractérisée en ce que**, après la teinture avec les colorants de formule (I), la couche d'oxyde poreuse teinte est colmatée.

10. Les couches d'oxyde teintes par le procédé selon l'une des revendications 6 à 9.
